# EUROPEAN PATENT APPLICATION

(11) **EP 3 437 587 A1**
(43) Date of publication of application: **06.02.2019**
(21) Application number: 17773587.5
(22) Date of filing: 25.01.2017
(51) Int. Cl.: A61C 8/00

(54) **CONNECTION STRUCTURE OF DENTAL ABUTMENT**

(30) Priority: 30.03.2016 JP 2016067961
(71) Applicant: GC Corporation, Sunto-gun, Shizuoka 410-1307 (JP)
(72) Inventor: MASHIO, Go, Tokyo 174-8585 (JP); MIZUGUCHI, Yusuke, Tokyo 174-8585 (JP); DOUMOTO, Tatsuru, Tokyo 174-8585 (JP); TAKAYAMA, Masayuki, Tokyo 174-8585 (JP); OKADA, Jyunichi, Tokyo 174-8585 (JP)
(74) Representative: Müller-Boré & Partner Patentanwälte PartG mbB
(86) International application number: PCT/JP2017/002577
(87) International publication number: WO 2017/169037

(57) **Abstract**

A connection structure for a dental abutment is such that an embedded part of a dental base part to fit to an oral cavity side of an implant fixture embedded in a jawbone is inserted into and connected to an insertion hole of a dental cutting block part, wherein the dental cutting block part includes a first flat surface and a protrusion on an inner peripheral surface of the insertion hole, and wherein the dental base part includes, on an outer peripheral surface of the embedded part, a second flat surface that corresponds to the first flat surface.

## Description

### [Technical Field]

The present invention relates to a connection structure for a dental abutment.

### [Background Art]

In a dental implant treatment, for bonding an artifact obtained by adding a function and a shape of a tooth to an implant fixture embedded in a jawbone, bonding is often made through a component called a dental abutment (which may simply be referred to as the abutment, hereinafter). An abutment is a component having a shape to be engaged with an oral cavity side of an implant fixture and an artifact to which a function and a shape of a tooth are added. In recent years, in order to enhance functionality of a dental abutment after a dental implant treatment, the dental abutment is divided into a dental base part (which may simply be referred to as the base part, hereinafter) that contacts an oral cavity side of an implant fixture and a dental cutting block part (which may simply be referred to as the cutting block part, hereinafter) and they are processed, and the base part and the cutting block part are firmly bonded by an adhesive to be prepared.

As described above, for bonding and securing the base part and the cutting block part of the dental abutment, it is important to ensure a gap for an adhesive between an embedded part of the base part and an insertion hole of the cutting block. Additionally, it is important to firmly secure the embedded part of the base part in the insertion hole of the cutting block so as to prevent a shift, such as rotation, of the cutting block part.

In view of the above-described point, for example, in Patent Document 1, a configuration is disclosed such that a gap for an adhesive is formed between an insertion hole of a cutting block part and an embedded part of a base part by providing three or more protrusions that are parallel to an axial direction on an outer peripheral surface of the embedded part of the base part.

Furthermore, it is described that each of the plurality of protrusions has a length from 0.05 mm to 3 mm, a width from 0.05 mm to 0.2 mm, and a height from 0.01 mm to 2 mm, and that the plurality of protrusions form gaps for the adhesive with uniform width, and sufficient adhesive strength can be obtained.

### [Citation List]

### [Patent Literature]

[PTL 1]
Japanese Unexamined Patent Publication No. 2012-245322

### [Summary of Invention]

### [Technical Problem]

It is difficult, however, to accurately form the plurality of protrusions, and an error occurs. The insertion hole of the cutting block part and the embedded part of the base part have cylindrical shapes, respectively. Accordingly, when the insertion hole of the cutting block part and the embedded part of the base part are engaged with each other to be bonded, if there is an error, a rattle occurs between the cutting block part and the base part in a rotation direction, and an orientation of the cutting block part may not be accurately determined with respect to the base part after adhesion.

The cutting block part is a component to be engaged with an artifact to which a function and a shape of a tooth are added so as to regulate the orientation of the artifact to which the function and the shape of the tooth are added. Accordingly, if the orientation is deviated, occlusion after the dental implant treatment may be deviated, and, thus, favorable treatment may not be performed.

An object of one embodiment of the present invention is to provide a connection structure for a dental abutment which can prevent a deviation between the base part and the cutting block, such as rotation.

### [Solution to Problem]

The above-described problem can be solved by a connection structure for a dental abutment such that an embedded part of a dental base part to fit to an oral cavity side of an implant fixture embedded in a jawbone is inserted into and connected to an insertion hole of a dental cutting block part, wherein the dental cutting block part includes a first flat surface and a protrusion on an inner peripheral surface of the insertion hole, and wherein the dental base part includes, on an outer peripheral surface of the embedded part, a second flat surface that corresponds to the first flat surface.

### [Advantageous Effects of Invention]

According to the present invention, a bonding structure for a dental abutment can be provided, which can prevent a deviation between the base part and the cutting block, such as rotation.

### [BRIEF DESCRIPTION OF THE DRAWINGS]

FIG. 1 is a partial cross-sectional view illustrating an example of a connection structure for a dental abutment according to an embodiment of the present invention;
FIG. 2 is a bottom view of a cutting block part;
FIG. 3 is a cross-sectional view taken along arrows II-II in FIG. 2;
FIG. 4A is a front view of a base part;
FIG. 4B is a plan view of the base part;
FIG. 5 is a partial cross-sectional view illustrating a state in which the base part and the cutting block part are adhered;
FIG. 6 is a cross-sectional view taken along arrows III-III in FIG. 5;
FIG. 7A is a perspective view illustrating a state after the cutting block part is cut; and
FIG. 7B is a partial cross-sectional view illustrating a state in which the cutting block part that is cut and the base part are adhered.

### [Description of Embodiments]

A connection structure for a dental abutment according to an embodiment is described. In the drawings, identical reference numerals are attached to identical or corresponding parts, and duplicate descriptions are simplified or omitted as appropriate. The drawings are not intended to indicate relative ratios between members or between components. Accordingly, specific sizes can be determined by a person ordinarily skilled in the art in light of the following non-limiting embodiments.

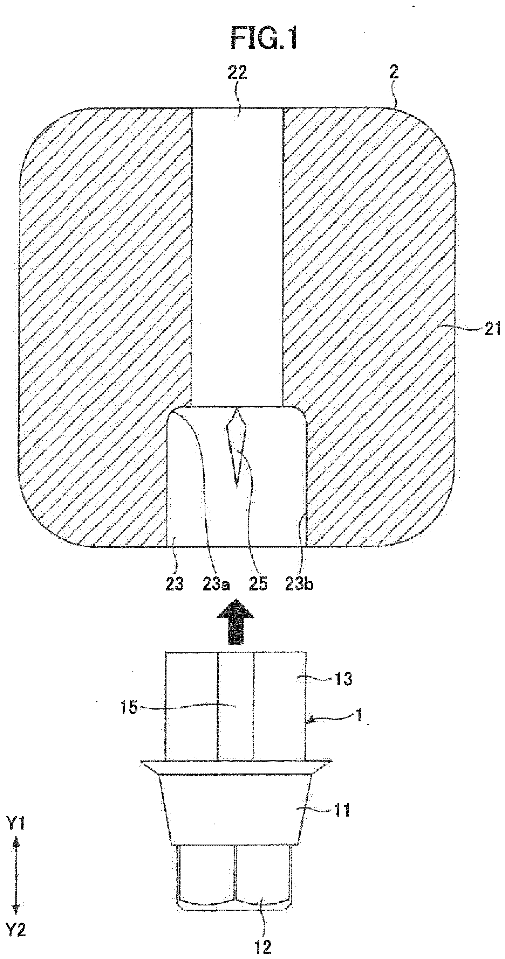

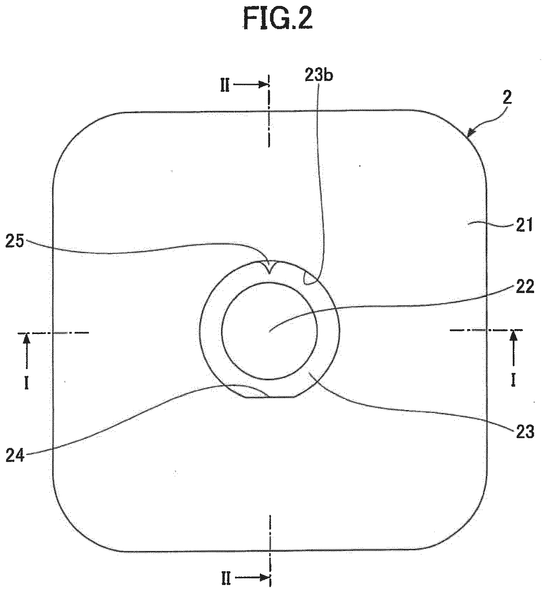

FIG. 1 is an overall view illustrating the connection structure for the dental abutment according to the embodiment. For convenience of the description, the depicted base part 1 shows a front view, and the cutting block part 2 shows a longitudinal sectional view. More specifically, the cutting block part 2 shows the cross-sectional view along arrows I-I in FIG. 2.

The dental abutment according to the embodiment is formed of the base part 1 and the cutting block part 2. The present invention is a connection structure for inserting, inside an insertion hole 23 of the cutting block part 2, an embedded part 13 of the base part 1 to be engaged with an oral cavity side (the arrow Y1 side) of an implant fixture (not depicted) embedded in a jawbone, so that they are bonded to each other. Note that, as the cutting block part 2 according to the embodiment, a cutting block part is used in which the insertion hole 23 is formed in advance. Additionally, the cutting block part 2 according to the embodiment includes a dental substitute material that has already been cut.

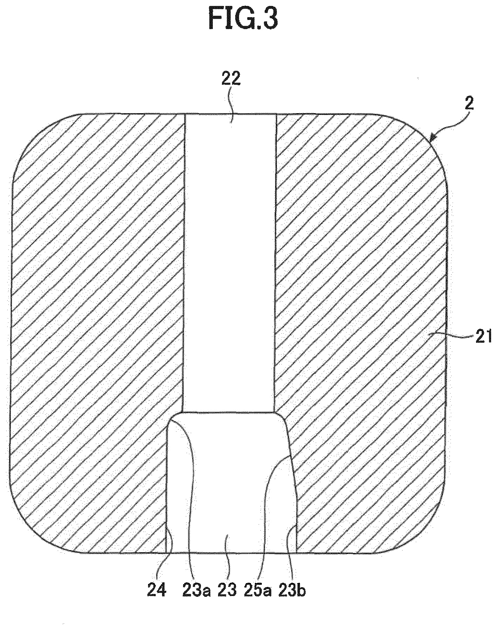

First, a configuration of the cutting block part 2 is described by referring to FIG. 1 through FIG. 3. FIG. 2 is a bottom view of the cutting block part as viewed from the bottom surface. FIG. 3 is a cross-sectional view along arrows II-II of FIG. 2.

The cutting block part 2 is provided with a cutting part 21; a through hole 22; and the insertion hole 23. The cutting block part 2 may be formed of a material, such as zirconia or titanium. In the cutting block part 2, the cutting part 21 may be cut into a tooth shape of a user so as to form a dental substitute material.

The through hole 22 is a cylindrical through hole passing through the cutting part 21, and a bolt, which is to be screwed into a female screw threaded in the implant fixture, is inserted into the through hole 22.

The insertion hole 23 is a hole formed at a lower side (the arrow Y2 side) of the through hole 22, into which the embedded part 13 of the base part 1 is to be inserted. The insertion hole 23 has an approximate cylindrical shape and has a diameter that is slightly greater than that of the through hole 22. A step part 23a is formed in the insertion hole 23.

The present invention is characterized in the configuration of the insertion hole 23. The insertion hole 23 according to the embodiment is provided with a first flat surface 24 and a protrusion 25, which are formed on an inner peripheral surface 23b.

The first flat surface 24 is formed by cutting, which is called D-cutting. The first flat surface 24 extends along an axial direction (arrow Y1-Y2 direction) of the cutting block part 2. The first flat surface 24 may preferably be widely formed to be greater than or equal to a length of the embedded part 13 of the base part 1 in the axial direction (the arrow Y1-Y2 direction) within a range in which the first flat surface 24 does not contact a curved surface in the extension direction of the inner peripheral surface of the through hole 22.

The protrusion 25 has a triangular shape in a plan view (see FIG. 2) and a rhomboidal shape in a front view (see FIG. 1). The protrusion 25 may be disposed on a diagonal line of the first flat surface 24. Additionally, the protrusion 25 is provided with a tapered surface 25a that narrows downward. The protrusion 25 is formed of zirconia or titanium, and a composite material of zirconia and titanium, etc., which can be cut as described above. Namely, the protrusion 25 is appropriately cut to be adjusted to the shape of the embedded part 13 of the base 1, which is described below. In the protrusion 25, a maximum protruding height toward inside may preferably be from 0.1 mm to 0.3 mm.

Accordingly, by finely adjusting, by a producer of the abutment, the shape of the protrusion 25 (the height toward inside) at a production site, the embedded part 13 of the base part 1 can be secured to an appropriate position in the insertion hole 23 of the cutting block part 2.

The protrusion 25 may preferably extend in the axial direction, and the protrusion height may preferably increase toward the inside of the insertion hole 23 (the direction of the arrow Y1). The length of the protrusion 25 in the axial direction may preferably be from 0.3 mm to 1 mm.

In the depicted example, each of the first flat surface 24 and the protrusion 25 is disposed at only one location on the inner peripheral surface 23b; however, the first flat surface 24 and the protrusion 25 are not limited to this and may be suitably modified.

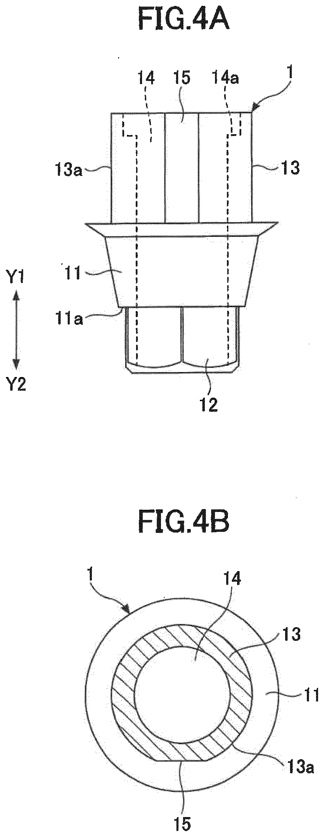

Next, the base 1 is described by referring to FIG. 1, FIG. 4A, and FIG. 4B. FIG. 4A is a front view of the base part 1. FIG. 4B is a plan view of the base part 1.

The base part 1 is provided with a gingiva contact part 11; a fitting part 12; the embedded part 13; and a through hole 14.

The gingiva contact part 11 may be formed to have a truncated conical shape that is thickened toward the oral cavity side from a jawbone-side abutment surface 11a that abuts an oral cavity side end surface of the implant fixture. When the embedded part 13, which is described below, is embedded in the insertion hole 23 of the cutting block part 2, in the gingiva contact part 11, the oral cavity side surface of the gingiva contact part 11 functions as a stopper, so that the embedded part 13 can be embedded to an accurate depth without embedding the embedded part 13 too deeply in the insertion hole 23.

The fitting part 12 is provided to protrude toward the jawbone side (the side of the arrow Y2) from the jawbone-side abutment surface 11a of the gingiva contact part 11, and the fitting part 12 fits to an end part of the implant fixture at the oral cavity side, so that the fitting part 12 can be prevented from being rotated. The fitting part 12 has a cylindrical shape.

The embedded part 13 is provided to protrude toward the side opposite to the fitting part 12 (the side of the arrow Y1), and the embedded part 13 is embedded into the insertion hole 23 of the cutting block part 2. Accordingly, the embedded part 13 is formed to have a diameter that is slightly smaller than that of the insertion hole 23. The embedded part 13 has a cylindrical shape. The gingiva contact part 11, the fitting part 12, and the embedded part 13 are formed so that their central axes are coaxial.

The through hole 14 is a through hole into which the bolt screwed into the female screw threaded in the implant fixture is inserted to pass through. The through hole 14 is formed to pass through the fitting part 12, the gingiva contact part 11, and the embedded part 13. A step part 14a, to which the head of the bolt abuts, is formed inside the through hole 14. A central axis of the through hole 14 is provided to be concentric with the central axes of the gingiva contact part 11, the fitting part 12, and the embedded part 13. Accordingly, the bolt inserted into the through hole 14 can be prevented from being inclined, so that the cutting block part 2 (the dental substitute material) integrated with the base part can be firmly and accurately secured to the implant fixture by the bolt. Furthermore, there is an advantage that the head of the bolt can be prevented from abutting the cutting block part 2.

The present invention is characterized in the embedded part 13. The embedded part 13 according to the embodiment is provided with a second flat surface 15, which corresponds to the first flat surface 24, formed on an outer peripheral surface 13a.

The second flat surface 15 is formed by cutting, which is called D-cutting. The second flat surface 15 extends along the axial direction (the arrow Y1-Y2 direction) of the cutting block part 2. The second flat surface 15 is formed to have a width that is smaller than the width of the first flat surface 24. The second flat surface 15 is formed so that, when the embedded part 13 of the base 1 is inserted into the insertion hole 23 of the cutting block part 2, the shape and the position of the second flat surface 15 correspond to those of the first flat surface 24. In order to secure the strength of the embedded part 13, the width of the second flat surface 15 may preferably be as wide as possible in a range in which the thickness of greater than or equal to 0.2 mm can be ensured, and, in the height direction, the second flat surface 15 may preferably extend to the entire embedded part 13 in the axial direction (the direction of the arrow Y1-Y2).

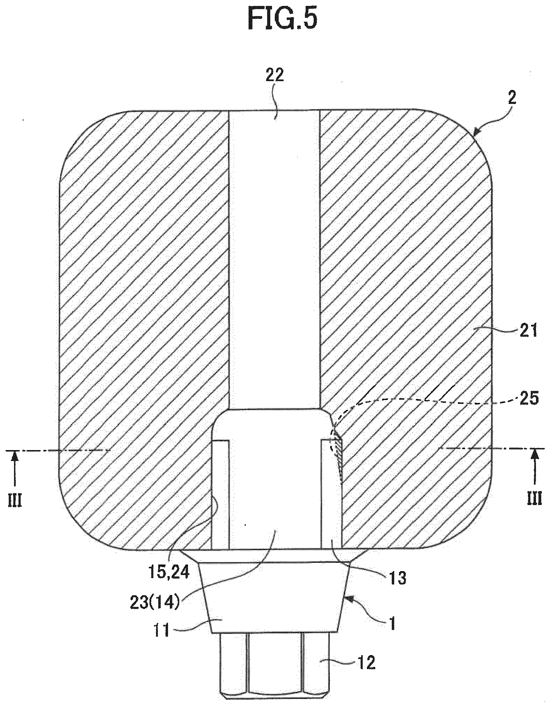

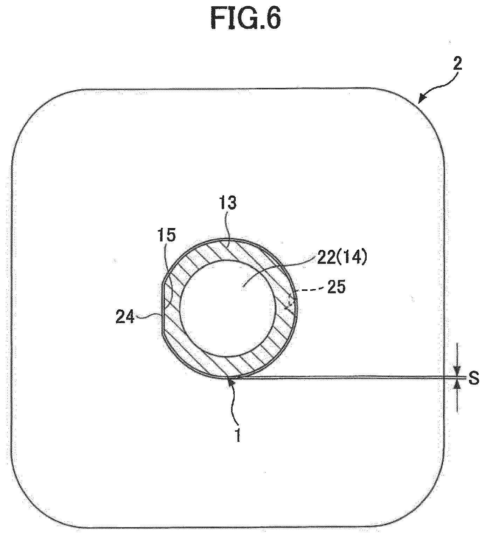

FIG. 5 and FIG. 6 show the state in which the base part 1 and the cutting block part 2 are connected, which are configured as described above.

FIG. 5 is a partial cross-sectional view illustrating a state in which the base part 1 and the cutting block part 2 are connected. FIG. 6 is a cross-sectional view taken along arrows III-III in FIG. 5.

As depicted, when the embedded part 13 of the base part 1 is embedded into the insertion hole 23 of the cutting block part 2, the second flat surface 15 is arranged to correspond to a position in the vicinity of the outer side of the first flat surface 24. Then, the first flat surface 24 and the second flat surface 15 can resist external force in the rotational direction of the cutting block part 2.

Additionally, the protrusion 25 of the cutting block part 2 is cut to have a shape that prevents, when the embedded part 13 of the base part 1 is inserted, a positional shift of the cutting block part 2 from occurring, while reserving a gap S of approximately 5 µm to 100 µm between the outer peripheral surface 13a of the embedded part 13 and the inner peripheral surface 23b of the insertion hole 23. The dotted line shows the cut portion of the protrusion 25. Consequently, the cutting block part 2 is firmly connected and secured to the base part 1 by the first flat surface 24 and the second flat surface 15, which are described above, and the protrusion 25. In this manner, a deviation, such as rotation, of the cutting block part 2 can be securely prevented.

The gap S between the outer peripheral surface 13a of the embedded part 13 and the inner peripheral surface 23b of the insertion hole 23 may preferably be filled with a dental adhesive.

However, in the embodiment, as described above, the base part 1 and the cutting block part 2 are firmly connected and secured, and it is unlikely that the cutting block part 2 rotates. Accordingly, a process of filling the dental adhesive can be omitted. An operation of filling the dental adhesive into the narrow gap S has been one of extremely troublesome tasks in the past. In the embodiment, the process of filling the dental adhesive can be omitted, so that work efficiency of a dentist can be enhanced.

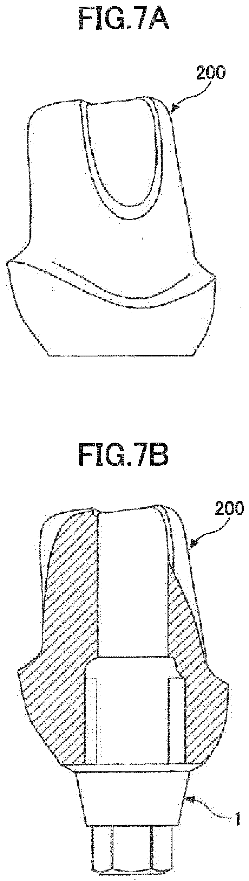

FIG. 7A shows an example of a dental substitute material 200 that is formed, for example, by cutting the cutting block part 2 (which may simply referred to as the cutting block part 200, hereinafter). FIG. 7B is a reference view illustrating a state in which the cutting block part 200 that has been cut and the base part 1 are connected. Basically, the cutting block part 200 that has been cut is the same as the cutting block part 2 except that the outer peripheral surface of the cutting part 21 of the cutting block part 2 has been cut. Furthermore, the base part 1 is also the same, and the depicted connection structure is the same as that of FIG. 1 through FIG. 6.

An example of a procedure is described below that is for forming the abutment according to the present invention from the cutting block part 2 and the cutting block part 200 that has been cut.

First, the base part 1 is produced and prepared by cutting a cylindrical material, a bar-shaped material, etc., as shown in FIG. 1 through FIG. 6. As the material of the abutment, any material can be used provided that the material has strength and safety allowed to be used in an oral cavity. For example, metals, such as titanium and titanium alloy, can be used. Here, the gingiva contact part 11 and the fitting part 12 of the base part 1 are formed to have respective shapes so as to be fit the implant fixture attached in an oral cavity of a patient.

Subsequently, a shape of the inside of the oral cavity of the patient including a part at which the implant fixture is embedded is obtained by a dental impression material or a three-dimensional scanner, and a model or three-dimensional data on a computer is prepared that reproduces the shape of the inside of the oral cavity. On the model or the three-dimensional data, a position at which an artifact provided with a function and a shape of a tooth to be attached to the patient is determined, and a shape of an abutment is designed that can fix the positional relation between them.

The shape of the abutment can be obtained by piling up wax for a dental technique on a jig on which the shape of the base part 1 or the shape of the gingiva contact part 11 and the shape of the fitting part 12 of the base part 1 are reproduced, or by adding three dimensional data to the three dimensional data that reproduces the shape of the base part 1 or the shape of the gingiva contact part 11 and the shape of the fitting part 12 of the base part 1.

The shape of a part obtained by removing the shape of the base part from an outer shape of the designed abutment is converted, using a three-dimensional measuring device, etc., into three-dimensional data that can be processed by computer CAD software.

Subsequently, the insertion hole 23, which fits the embedded part 13 of the base part 1 and which is provided with, as illustrated in FIG. 2 and FIG. 3, the shape of the protrusion 25 and the shape of the first flat surface 24, is designed based on the three-dimensional data using the CAD software.

In practice, it suffices to synthesize three-dimensional data that is designed in advance in accordance with the embedded part 13 of the base part 1 to be used. The three-dimensional data of the shape that is designed in this manner, such as that of illustrated in FIG. 7A, is created.

A rectangular parallelepiped ceramic cutting block part 2 is attached to a CAD/CAM processing machine, and the cutting block part 2 that has been cut is obtained by cutting and processing the cutting block part 2 based on the designed three-dimensional shape data.

As for the cutting block part 2 to be used, a cutting block part in which an insertion hole 23 is formed in advance can be used, which corresponds to the cutting block part 2 used in FIG. 1 through FIG. 6.

For example, when the cutting block part itself is formed by a metal mold, etc., the insertion hole 23 has a standard shape that does not depend on each patient, so that the insertion hole 23 may be simultaneously formed by the metal mold, etc. Namely, it is not required to repeatedly cut and process insertion holes 23 having the same shapes, so that it is efficient.

Note that, if the ceramic cutting block part to be used is a sintered body, a slight error in size may occur after sintering in the insertion hole 23 that is formed in advance. However, in the embodiment, by appropriately cutting the protrusion 25, the above-described error can be compensated for.

In order to actually perform treatment using the cutting block part 2 and the base part 1, which are produced as described above, first, a dental adhesive is applied to the outer peripheral surface 13a of the embedded part 13 of the base part 1 according to the present invention, and to the inner peripheral surface 23b of the insertion hole 23 of the cutting block part 200 that has been cut, and the embedded part 13 of the base part 1 is inserted into the insertion hole 23 of the cutting block part to be bonded and secured.

The abutment obtained in this manner is attached to the implant fixture in an oral cavity of a patient, a bolt is inserted from a bolt insertion through hole of the abutment, and the bolt is screwed into the female screw threaded in the implant fixture to secure the abutment. An artifact provided with a function and a shape of a tooth is bonded on the abutment that is secured in the oral cavity in this manner, and the implant treatment is completed.

The preferred embodiments of the present invention are described in detail above. However, the present invention is not limited to the above-described specific embodiments, and various modifications and alterations may be made within the gist of the present invention described in the claims.

The patent application is based upon and claims the benefit of priority to Japanese Patent Application No. 2016-67961 filed on March 30, 2016, and the entire content of the Japanese Patent Application is hereby incorporated herein by reference.

### [LIST OF REFERENCE SYMBOLS]

- 1: base part
- 11: gingiva contact part
- 12: fitting part
- 13: embedded part
- 14: through hole
- 15: second flat surface
- 2: cutting block part
- 21: cutting part
- 22: through hole
- 23: insertion hole
- 23b: inner peripheral surface
- 24: first flat surface
- 25: protrusion
- 200: cutting block part that has been cut

## Claims

1. A connection structure for a dental abutment such that an embedded part of a dental base part to fit to an oral cavity side of an implant fixture embedded in a jawbone is inserted into and connected to an insertion hole of a dental cutting block part,
wherein the dental cutting block part includes a first flat surface and a protrusion on an inner peripheral surface of the insertion hole, and
wherein the dental base part includes, on an outer peripheral surface of the embedded part, a second flat surface that corresponds to the first flat surface.

2. The connection structure for the dental abutment according to claim 1, wherein the protrusion is formed along an axial direction of the dental cutting block part, and the protrusion is provided with a tapered surface.

3. The connection structure for the dental abutment according to claim 1, wherein the protrusion is a material that can be cut.

4. The connection structure for the dental abutment according to claim 1, wherein the first flat surface and the second flat surface extend along an axial direction of the dental cutting block part and the dental base part.

5. The connection structure for the dental abutment according to claim 1, wherein the protrusion is disposed on a diagonal line of the first flat surface.
